# EUROPEAN PATENT APPLICATION

(11) **EP 2 211 527 A1**
(43) Date of publication of application: **28.07.2010**
(21) Application number: 09100067.9
(22) Date of filing: 23.01.2009
(51) Int. Cl.: H04L 29/08, H04L 29/06, G06K 7/08

(54) **Autonomous RFID reader**

(71) Applicant: Thivent, Vincent, 71500 Louhans (FR)
(72) Inventor: Thivent, Vincent, 71500 Louhans (FR)
(74) Representative: Cabinet Plasseraud

(57) **Abstract**

The present invention relates to an RFID reader comprising an RFID module (2) including at least an antenna, an RF receiver, an RF transmitter, a carrier signal generator and a demodulator; said RFID reader being remarkable in that it comprises an Ethernet controller and a programmable circuitry (3) able to operate as a client and/or a server and that comprises a file server (4) and at least one database (5), said programmable circuitry (3) being connected in one hand to an I/O device (7) and in the other hand to at least a removable flash memory (8) and a real time clock (9).

## Description

### FIELD OF THE INVENTION

The invention relates in general to Radio-Frequency IDentification (RFID) and in particular to an RFID reader that includes RF transmitter and receiver to read and write transponder tags that are either at a stationary location or on move. The RFID reader according to the invention is autonomous, plug and play and can be controlled and computed on line.

### DESCRIPTION OF PRIOR ART

The RFID technology is well known in the art and already used in many applications. RFID is an automatic identification method, relying on storing and remotely retrieving data using devices called RFID tags or transponders. The RFID technology requires an extent of cooperation of an RFID reader and an RFID tag.

Usually, an RFID tag contains at least two parts. The first part is an integrated circuit for storing and processing information, modulating and demodulating a radio-frequency (RF) signal, and possibly other functions. The second part is an antenna for receiving and transmitting the signal.

There are generally three types of RFID tags: passive RFID tags, active RFID tags, and semi-active RFID tags.

The most common type of RFID tags is passive RFID tags that have no internal power supply. The electrical current induced in the antenna by the incoming radio frequency signal (provided by the RFID reader) provides just enough power for the CMOS (Complementary Metal Oxide Semiconductor) integrated circuit in the tag to power up and transmit a response. The antenna of the passive tag has to be designed both to collect power from the incoming signal and also to transmit the outbound backscatter signal. The passive RFID tag can contain non-volatile data, as writable EEPROM (Electrically-Erasable Programmable Read-Only Memory) for storing data. Passive RFID tags have practical read distances ranging from about 10cm with near-field, up to approximately 1 meter with far-field. Note that a passive RFID tag can have a read distance that can reach up to 180 meters when combined with a phased array.

Active RFID tags have an onboard power supply, such as a battery, and may transmit at higher power levels than passive tags. Active RFID tags may include larger memories than passive tags, and may include the ability to store additional information received from the reader and/or specialized sensor as a temperature sensor for example.

Semi-passive RFID tags are similar to active RFID tags. Semi-passive RFID tags have their own power source that only powers the microchip and does not power the broadcasting of a signal.

Different types of RFID reader are well known and had been already disclosed in the related art in connection with particular applications.

It is the case, for example, of the US patent N° 6,362,738 that describes a contact less programmable electrostatic RFID reader that is used as an Electronic Article Surveillance reader.

The US patent N° 6,523,752 discloses an RFID reader used in delivery sorting of delivery articles and the US patent N° 6,415,978 describes a multiple technology data reader for reading barcode labels and RFID tags

The US patent application N° 2006/267731 discloses an internet-linked RFID sensor network including a RFID reader which contains system software that uses an active, real-time monitoring method to process object's conditions and location information to provide an alert that can be transmitted to a remote monitoring station. The RFID reader comprises a system processor which is connected to IF (Intermediate Frequency) Digital Signal Processing (DSP) Processor, Landline Communication Module, System Memory, Flash Memory, On/Off Button, Communication Switch, and Power Supply.

Moreover, the US patent application N° 2006/279413 discloses an RFID device comprises an RFID module operable to communicate with an RFID tag, and an interface circuitry coupled to the RFID module operable to enable data communications between the RFID module and a mobile device. RFID reader comprises an SDIO (Secure Digital Input Output) interface that communicates with a host device with a SD card slot. SDIO interface has a standard 9-pin configuration, and a chamfered corner 16 and a guide rail 18 to facilitate proper orientation and insertion into the SDIO card slot. SDIO module includes a microcontroller coupled to a memory. Said microcontroller is further coupled to host device via SDIO connector and to an RFID module via an RFID module connector. RFID module may comprise components found in typical RFID readers, including antenna, RF receiver, RF transmitter, carrier signal generator, demodulator, microprocessor, etc.

RFID readers mentioned in the above patents need a computer, as a personal computer for example, including specialized software and/or driver to control said RFID reader which are not autonomous.

Moreover, these RFID readers are not plug and play and can not be controlled and computed on line and/or off line in an effective manner.

To overcome above-mentioned limitation, a need exists for a RFID reader that is autonomous, plug and play and can be controlled and computed via any network.

### SUMMARY OF THE INVENTION

It is therefore an object of the invention to provide an RFID reader that is autonomous, plug and play and can be controlled and computed via any network.

For this purpose, it is proposed an RFID reader comprising an RFID module including at least an antenna, an RF receiver, an RF transmitter, a carrier signal generator and a demodulator, remarkable in that it comprises an Ethernet controller and a programmable circuitry able to operate as a client and/or a server and that comprises a file server and at least one database, said programmable circuitry being connected in one hand to an I/O device and in the other hand to at least a removable flash memory and a real time clock.

The programmable circuitry is a microcontroller that comprises at least a processor core, memory, and programmable input/output peripherals.

Said database is preferably recorded in the microcontroller's memory.

In another embodiment, the database is recorded in a fixed non-volatile memory connected to the programmable circuitry.

Moreover, the fixed non-volatile memory is an EEPROM and the microcontroller includes at least one TCP/IP stacks.

Said TCP/IP stacks supports ARP (Address Resolution Protocol) and/or IP (Internet Protocol) and/or ICMP (Internet Control Message Protocol) and/or UDP (User Datagram Protocol) and/or TCP (Transmission Control Protocol) and/or DHCP (Dynamic Host Configuration Protocol) and/or SNMP (Simple Network Management Protocol) and/or HTTP (Hypertext Transfer Protocol) and/or FTP (File Transfer Protocol) and/or TFTP (Trivial File Transport Protocol) stacks.

The RFID module is operable to read data stored in an RFID tag and/or to write data for storage in an RFID tag.

The RFID reader according to the invention comprises a network interface connected to the microcontroller, said microcontroller piloting the network interface. Said network interface is preferably a NIC (network interface card).

Moreover, the removable flash memory is a SD or mini SD card.

Accessorily, the RFID reader comprises a wireless protocol consisting in a Wifi protocol and/or a Bluetooth protocol and/or a zigbee protocol for example.

Advantageously, Ethernet controller is included into the microcontroller.

### BRIEF DESCRIPTION OF THE DRAWINGS

For a further understanding of the objects and advantages of the present invention, references should be made to the following drawings in conjunction with the accompanying descriptions and operations, wherein:
- Figure 1 is a simplified block diagram of the RFID reader according to the invention,
- Figure 2 is another simplified block diagram of the RFID reader according to the invention,
- Figure 3 is a more detailed block diagram of a part of the RFID reader according to the invention,
- Figure 4 is a more detailed block diagram of the other part of the RFI reader according to the invention,
- Figure 5 is an illustrative schematic diagram of an application of the RFID reader according to the invention,
- Figure 6 is an illustrative schematic diagram of another application of the RFID reader according to the invention.

### DETAILED DESCRIPTION

It is emphasized that, in accordance with the standard practice in the industry, various features are not drawn to scale. In fact, the dimensions of the various features may be arbitrarily increased or reduced for clarity of discussion.

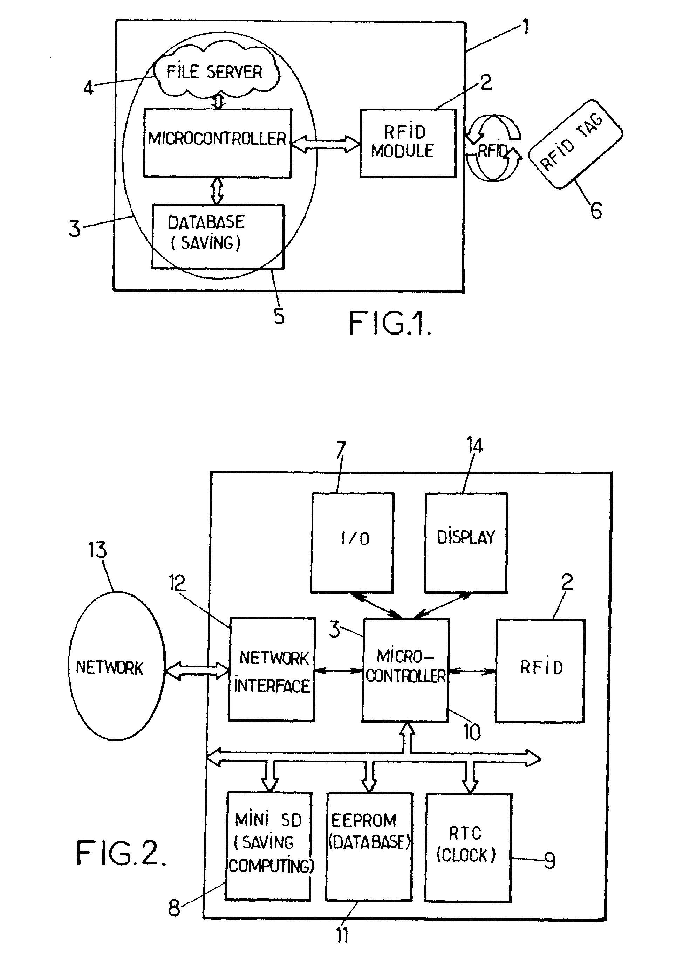

Referring to figure 1, the RFID reader 1 according to the invention comprises an RFID module 2 including at least an antenna, an RF receiver, an RF transmitter, a carrier signal generator and a demodulator, and a programmable circuitry 3 able to operate as a client and/or a server and that comprises a file server 4 and at least one database 5. The RFID module can read and write transponder tags 6 that are either at a stationary location or on move. Note that transponder tags 6 can be any type of RFID tags: passive RFID tags, active RFID tags, and semi-active RFID tags. The file server 4 is preferably a web server which is a computer program that is responsible for accepting HTTP requests from clients (user agents such as web browsers), and serving them HTTP responses along with optional data contents, which usually are web pages such as HTML documents and linked objects (images, etc.).

Said web server 4 has at least an HTTP feature and a logging feature. The web server program operates by accepting HTTP requests from the client, and providing an HTTP response to the client. The HTTP response usually consists of an HTML document, but can also be a raw file, an image, or some other type of document (defined by MIME-types). If some error is found in client request or while trying to serve it, a web server has to send an error response which may include some custom HTML or text messages to better explain the problem to end users.

The web server 4 have also the capability of logging some detailed information, about client requests and server responses, to log files; this allows the webmaster to collect statistics by running log analyzers on these files.

Accessorily, the web server 4 implement the following features : Authentication, Handling of static content (file content recorded in server's filesystem(s)) and dynamic content, HTTPS support, Content compression, Virtual hosting, Large file support and Bandwidth throttling.

The Authentication is an optional authorization request, as a request of user name and password for example, before allowing access to some or all kind of resources.

The Handling of static content (file content recorded in server's filesystem(s)) and dynamic content is provided by supporting one or more related interfaces (SSI, CGI, SCGI, FastCGI, JSP, PHP, ASP, ASP.NET, Server API such as NSAPI, ISAPI, etc.).

The HTTPS support (by SSL or TLS) allows secure, i.e. encrypted, connections to the server on the standard port 443 instead of usual port 80.

The Content compression, i.e. by gzip encoding for example, reduces the size of the responses (to lower bandwidth usage, etc.).

The Virtual hosting allows serving many web sites using one IP address.

The Large file support permits to serve files whose size is greater than 2 GB on 32 bit OS and the Bandwidth throttling limits the speed of responses in order to not saturate the network and to be able to serve more clients.

Referring to figures 2 to 4, the RFID reader comprises a programmable circuitry 3 able to operate as a client and/or a server and that comprises a file server 4 and at least one database 5, said programmable circuitry being connected in one hand to an I/O device 7 and in the other hand to at least a removable flash memory 8, such as a SD or mini SD card, USB memory stick or any suitable removable flash memory 8, and a real time clock 9. Said removable flash memory 8 allows upgrading the RDIF reader, such as programs of the programmable circuitry, and/or saving data that are read and/or write by the RFID reader.

To upgrade the RFID reader, a flash memory 8 including an upgrading program, such as program including a launching program, is inserted into the corresponding slot of the RFID reader and the upgrading program is launched automatically.

The programmable circuitry 3 is advantageously a microcontroller 10, also called MCU or pC, which includes at least a processor core, memory, and programmable input/output peripherals. Said memory of the microcontroller 10 includes a small amount of RAM, program memory, or both. The database 5 is advantageously recorded in the microcontroller's memory 10. In this embodiment, the microcontroller is a PIC microcontroller (registered trademark by Microchip Technology Incorporated), reference 18F86J60, which is well known by the man skilled in the art. Said microcontroller 10 includes an Ethernet controller which allows a frame-based computer networking for local area networks (LANs).

Alternatively, the database is recorded in a fixed non-volatile memory 11, such an EEPROM for example, connected to microcontroller 10. Said fixed non-volatile memory 11 allows saving any kind of data.

The removable flash memory 8, the real time clock 9 and optionally the fixed non volatile memory 11 are connected to the microcontroller via a Serial Peripheral Interface Bus, called SPI bus, is a synchronous serial data link that operates in full duplex mode. Consequently, the RFID reader according to the invention can operate with a single master device and with one or more slave devices.

Alternatively, the real time clock 9 can be integrated in the PIC microcontroller 10, said real time clock 9 being software using the clock included in the PIC microcontroller 10.

Moreover, the microcontroller includes at least one TCP/IP stacks. Said TCP/IP stacks supports ARP (Address Resolution Protocol) and/or IP (Internet Protocol) and/or ICMP (Internet Control Message Protocol) and/or UDP (User Datagram Protocol) and/or TCP (Transmission Control Protocol) and/or DHCP (Dynamic Host Configuration Protocol) and/or SNMP (Simple Network Management Protocol) and/or HTTP (Hypertext Transfer Protocol) and/or FTP (File Transfer Protocol) and/or TFTP (Trivial File Transport Protocol) stacks. All these protocols are well known by the ma skilled in the art.

Accessorily, the RFID reader according to the invention comprises a wireless protocol associated with a wireless communication device such as Wi-fi (registered trademark by Wi-fi Alliance) protocol and/or a Bluetooth (registered trademark by Bluetooth SIG) protocol and/or a zigbee (registered trademark by Zigbee Alliance) protocol and/or infrared protocol such as IrPHY, IrLAP, IrLMP, IrCOMM, Tiny TP, IrOBEX, IrLAN and IrSimple for example and/or any suitable wireless protocol.

Note that, accessorily, the RFID reader can also comprises a protocol associated with a PLC device, according to the acronym "Power Line communication" or "Power Line Carrier", or a BPL device, according to the acronym "Broadband for Power Line", without departing of the scope of the invention. Power line communication or power line carrier (PLC), also known as Power line Digital Subscriber Line (PDSL), mains communication, power line telecom (PLT), or power line networking (PLN), is a system for carrying data on a conductor also used for electric power transmission. Broadband over Power Lines (BPL) uses PLC by sending and receiving radio signals over power lines to provide access to the Internet network.

The RFID reader according to the invention comprises a network interface 12 connected to the microcontroller 10, said microcontroller piloting the network interface. Preferably, the network interface 12 is a NIC (network interface card), also called Network card, Network Adapter, LAN Adapter, which is designed to allow computers to communicate over a computer network 13. The card implements the electronic circuitry required to communicate using a specific physical layer and data link layer standard such as Ethernet or token ring. This provides a base for a full network protocol stack, allowing communication among small groups of computers on the same LAN and large-scale network communications through routable protocols, such as one of the protocols listed above.

Optionally, the RFID according to the invention comprises a display device 14 such a small liquid crystal display called LCD to visualize data read and or write by the RFID reader.

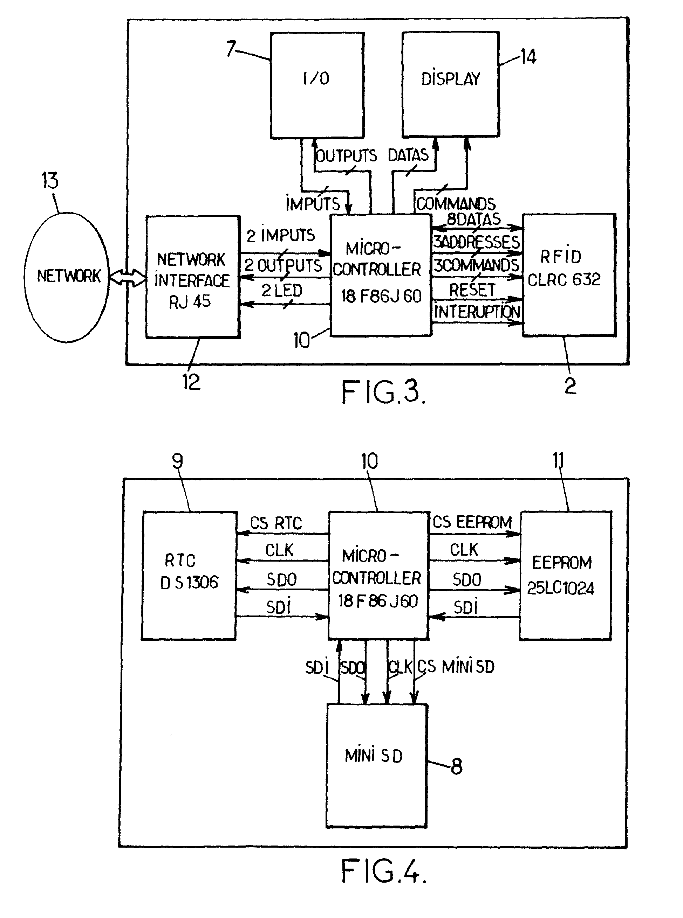

According to figure 3 and 4, an example of the architecture of the RFID reader according is disclosed. The RFID module 2 is connected to the microcontroller 10 via a parallel interface including 8 data pins, 3 address pins, 3 pilot pins, 1 reset pin and 1 interrupt pin. The removable flash memory 8, the real time clock 9 and optionally the fixed non volatile memory 11 are connected to the microcontroller via a Serial Peripheral Interface Bus, called SPI bus, including 1 clock pin, 2 data pins and 1 pilot pin. The display device 14 is connected to the microcontroller via the parallel interface using 8 data pins and 3 pilot pins. The I/O device is directly connected to the microcontroller to pilot at least one actuator such as a strike of an electromagnetic strike for example. Moreover, the network interface 12 is connected to the microcontroller via a parallel port comprising 2 input pins, 2 output pins and to pilot pins suitable to pilot an indicating LED.

When the RFID reader according to the invention operates as a server, it can be piloted by any computer, as a personal computer for example, comprising a web browser, the RFID reader and said computer being connected to the same network. We intend by "web browser" a software application which enables a user to display and interact with text, images, videos, music, games and other information typically located on a Web page at a Web site on the World Wide Web or a local area network. Web browsers communicate with Web servers primarily using Hypertext Transfer Protocol (HTTP) to fetch Web pages. HTTP allows Web browsers to submit information to Web servers as well as fetch Web pages from them. The most-commonly-used version of HTTP is HTTP/1.1, which is fully defined in RFC 2616. Some of the Web browsers currently available for personal computers include Internet Explorer, Mozilla Firefox, Safari, Opera, Avant Browser, Konqueror, Lynx, Google Chrome, Flock, Arachne, Epiphany, K-Meleon and AOL Explorer (all are registered trademark). For this purpose, the user write a command line and the URL address of the RFID reader in the URL window of the personal computer's web browser. Then, the microcontroller 10 of the RFID reader analyse URL's information and run the command line.

When the RFID reader according to the invention operates as a client, said RFID reader send a command request to a server connected to the same network as the RFID reader. A user, via the web browser of it's personal computer, can read web pages generated by the RFID reader's web server 4 and saved in the fixed non-volatile memory 11 and or in the removable flash memory 8. It should be noted that, because of TCP/IP stack, the RFID reader is directly recognized during its connection by any computer without any driver installation step. Consequently, the RFID reader according to the invention is "plug and play". We intend by "plug and play" the characteristic of a computer bus, or device specification, which facilitates the discovery of a hardware component in a system, without the need for physical device configuration, or user intervention in resolving resource conflicts. Plug and play refers both the traditional boot-time assignment of device resources and driver identification, as well as to hotplug systems such as USB and Firewire.

Moreover, the RFID reader can be upgrade by inserting a flash memory 8 including an upgrading program, such as program including a launching program, into the corresponding slot of the RFID reader and/or via the Ethernet network, the upgrading program being sent to the RFID reader from a personal computer and/or a server.

Alternatively, the RFID reader can be upgrade by connecting via wireless connection said RFID reader with a mobile device such as another RFID reader, a PDA, a mobile phone for example, including an upgrading program with a self launching program. When the mobile device including the upgrading program is bring close to the RFID reader, the upgrading program is transferred into the RFID reader and executed to upgrade it.

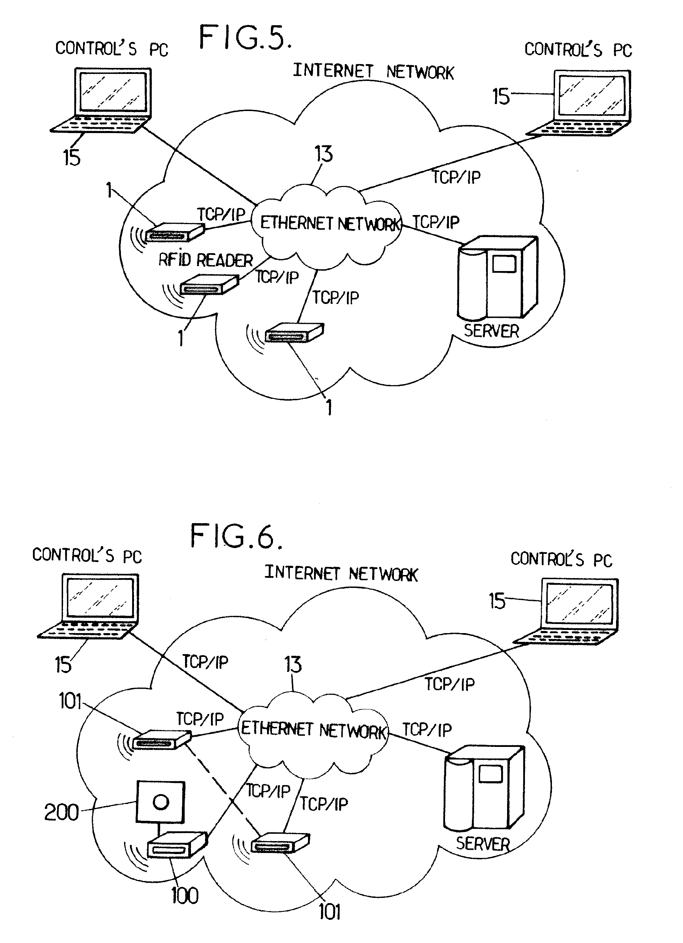

According to figure 5, an application of the RFID reader according to the invention for a building control access is disclosed. Each RFID reader 1, respectively located at an access door of the building, is connected to an Ethernet network 13 and comprises a database with the identifier of authorized persons. When a user having a card with an RFID tag presents its card in front of the RFID reader 1, said RFID reader 1 reads the tag's information, compares the information with its database and verifies that this user can enter the building. When the user is allowed to enter, said RFID reader 1 release the door. At least one control's personal computer 15 connected to the Ethernet network 13 can be used, via its web browser, to add and/or delete a user in the database of at least one RFID reader 1. For this purpose, the web browser sends to the RFID reader 1 an upgrading request to said RFID reader 1.

According to figure 6, an application of the RFID reader according to the invention for a strongbox or a secured room opening is disclosed. A first RFID reader 100 operating as a server and able to pilot the opening of a strong box 200 or a secured room is located near said strongbox. Said RFID reader 100 and two other RFID readers 101 operating as clients are connected to an Ethernet network 13 and comprises a database with the identifier of authorized persons. RFID reader 100 operating as a server synchronize real time clock (RTC) of the two other RFID readers 101. Said RFID readers 101 are located in at least one another building for example. When a user having a card with an RFID tag presents its card in front of the RFID reader 100, said RFID reader 1 reads the tag's information, compares the information with its database and verifies that this user can open the strongbox 200. For opening the strongbox 200, two other users must present its card in front of one of the RFID readers 100 or 101 in a set time interval. When each user presents its card in front of one of the RFID readers 100 or 101, said RFID reader reads the tag's information, compares the information with its database, verifies that this user is allowed to open the strongbox 200, and sends information with a time reference to the RFID reader 100 operating as a server. Said information is send directly to the RFID reader 100 via the Ethernet network 13 using TCP/IP connection or is send in a first step to another RFID reader 100 operating as a client via a wireless connection for example and in a second step to the RFID reader 100 via the Ethernet network 13 using TCP/IP connection. Then, said information with time reference is compared with the database of said RFID reader 100. Finally, if users are recognized as allowable user for opening the strongbox 200 and if said users are recognized in the set time interval, said RFID reader 100 pilots the actuator of the strongbox 200 for opening.

Note that, at least one control's personal computer 15 connected to the Ethernet network 13 can be used, via its web browser, to add and/or delete a user in the database of at least one RFID reader 1. For this purpose, the web browser sends to the RFID reader 1 an upgrading request to said RFID reader 1.

If a RFID reader 1 is out of order, it can be replaced easily because the RFID reader 1 is "plug and play" and the database of the new connected RFID reader 1 is upgraded by the control's personal computer 15.

Although embodiments of the present disclosure have been described in detail, those skilled in the art should understand that they may make various changes, substitutions and alterations herein without departing from the spirit and scope of the present disclosure. Accordingly, all such changes, substitutions and alterations are intended to be included within the scope of the present disclosure as defined in the following claims. In the claims, means-plus-function clauses are intended to cover the structures described herein as performing the recited function and not only structural equivalents, but also equivalent structures.

## Claims

1. RFID reader comprising an RFID module (2) including at least an antenna, an RF receiver, an RF transmitter, a carrier signal generator and a demodulator, **characterized in that** it comprises an Ethernet controller and a programmable circuitry (3) able to operate as a client and/or a server and that comprises a file server (4) and at least one database (5), said programmable circuitry (3) being connected in one hand to an I/O device (7) and in the other hand to at least a removable flash memory (8) and a real time clock (9).

2. RFID reader according to claim 1 **characterized in that** the programmable circuitry (3) is a microcontroller (10).

3. RFID reader according to claim 2 **characterized in that** the microcontroller (10) comprises at least a processor core, memory, and programmable input/output peripherals.

4. RFID reader according to claims 1 and 3 **characterized in that** the database (5) is recorded in the microcontroller's memory.

5. RFID reader according to any claim 1 to 3 **characterized in that** the database (5) is recorded in a fixed non-volatile memory (11) connected to the programmable circuitry (3).

6. RFID reader according to claim 5 **characterized in that** the fixed non-volatile memory (11) is an EEPROM.

7. RFID reader according to any claim 2 to 6 **characterized in that** the microcontroller (10) includes at least one TCP/IP stacks.

8. RFID reader according to claim 7 **characterized in that** the TCP/IP stacks supports ARP (Address Resolution Protocol) and/or IP (Internet Protocol) and/or ICMP (Internet Control Message Protocol) and/or UDP (User Datagram Protocol) and/or TCP (Transmission Control Protocol) and/or DHCP (Dynamic Host Configuration Protocol) and/or SNMP (Simple Network Management Protocol) and/or HTTP (Hypertext Transfer Protocol) and/or FTP (File Transfer Protocol) and/or TFTP (Trivial File Transport Protocol) stacks.

9. RFID reader according to any claim 1 to 8 **characterized in that** the RFID module (2) is operable to read data stored in an RFID tag (6).

10. RFID reader according to any claim 1 to 9 **characterized in that** the RFID module (2) is operable to write data for storage in an RFID tag (6).

11. RFID reader according to any claim 1 to 10 **characterized in that** it comprises a network interface (12) connected to the microcontroller (10), said microcontroller (10) piloting the network interface (12).

12. RFID reader according to claim 11 **characterized in that** network interface (12) is a NIC (network interface card).

13. RFID reader according to any claim 1 to 12 **characterized in that** the removable flash memory (8) is a SD or mini SD card.

14. RFID reader according to any claim 1 to 13 **characterized in that** it comprises a wireless protocol.

15. RFID reader according to claim 14 **characterized in that** the wireless protocol consists in a Wi-fi protocol and/or a Bluetooth protocol and/or a zigbee protocol.
